Europäisches Patentamt

European Patent Office

Office européen des brevets

(11) Publication number: **0 216 608**
**A2**

## (12) EUROPEAN PATENT APPLICATION

(21) Application number: **86307210.4**

(22) Date of filing: **19.09.86**

(51) Int. Cl.⁴: **F 16 D 51/38**

(30) Priority: **20.09.85 GB 8523240**

(43) Date of publication of application:
**01.04.87 Bulletin 87/14**

(84) Designated Contracting States: **DE FR GB IT**

(71) Applicant: **LUCAS INDUSTRIES public limited company**
**Great King Street**
**Birmingham, B19 2XF West Midlands (GB)**

(72) Inventor: **Taft, Phillip Augustus**
**33, Amington Road**
**Shirley West Midlands (GB)**

(74) Representative: **Waite, Anthony William et al**
**MARKS & CLERK Alpha Tower Suffolk Street Queensway**
**Birmingham B1 1TT (GB)**

(54) Internal shoe drum brake.

㉗ An internal shoe drum brake includes brake shoe assemblies (1, 2) each having a pair of brake shoe portions (1A, 1B, 2A, 2B) lying sequentially in a circumferential direction around the brake drum surface. Each shoe portion of each assembly is mounted on a respective fixed pivot (6, 7) disposed respectively towards opposite ends of the assembly. An actuator 4 expands the shoes via a pivoted carrier (5) to cause the shoe portions of each assembly (1, 2) to act respectively in a leading and trailing mode.

FIG 1

**Description**

INTERNAL SHOE DRUM BRAKE.

This invention relates to an internal shoe drum brake in which shoes mounted within a rotatable drum are arranged to be displaced outwardly by actuating means into braking engagement with the drum.

A widely used configuration of this kind of brake operates in a leading/trailing manner and is commonly known as a simplex brake. In one form of simplex brake, an actuator, often in the form of an S-cam, is arranged between one pair of adjacent shoe ends and the other pair of adjacent ends are mounted on fixed pivot pins so that the shoes, when actuated, perform a simple outward pivotal movement towards the drum. As is well understood in the art, the constraints imposed by the fixed pivot pins lead to poor shoe to drum conformability and the geometry of such an arrangement is conducive to unequal loading of the leading and trailing shoes. These deficiencies can produce high loadings at locations around the drum, giving rise to unequal shoe wear and also to drum distortion and cracking. This type of simplex brake is, however, of robust construction and due to its simplicity, cheap to make and assemble. It is therefore widely used, particularly in commercial vehicles, despite its aforesaid shortcomings.

In another form of simplex brake, the non-actuated shoe ends rest on an abutment which permits the shoes to slide thereon to some extent during actuation and thereby improves the shoe to drum conformability as compared with the pinned shoe arrangement referred to above. Moreover, the reaction forces of the leading and trailing shoes are more nearly equal and opposite so that substantially uniform lining load and consequent wear are obtained, accompanied by reduced drum distortion.

An object of the invention is to provide an internal shoe drum brake in which the simplicity and cheapness of a pinned shoe arrangement are retained and which also provides at least some of the advantages arising from improved shoe to drum conformability present in a sliding shoe arrangement.

According to the present invention, an internal shoe drum brake comprises at least one brake shoe assembly within a rotatable brake drum, each said assembly including a pair of brake shoe portions lying sequentially in a circumferential direction adjacent the drum surface, said shoe portions of each brake shoe assembly being mounted on respective pivots fixed relative to the shoe assembly and disposed towards opposite ends of that shoe assembly, and actuating means operable to displace the shoes about said pivots into engagement with the drum surface such that said portions act respectively in a leading and trailing mode for one direction of drum rotation.

This general arrangement enables the brake shoe portions, although mounted on rigid pivots, to apply substantially equal forces to the drum, enabling generally balanced braking forces and resulting high braking stability to be obtained.

In one convenient arrangement, each brake shoe assembly includes a carrier mounted towards one of its ends on a pivot fixed relative to the shoe assembly, each carrier being operatively associated with said actuating means at a location remote from said one end.

The shoe portions of each brake shoe assembly may be separate from the carrier and be engaged by the carrier at an intermediate location on the latter so that operation of said actuating means causes the carrier to pivot both shoe portions outwardly simultaneously about said fixed pivots.

In an alternative arrangement, part of the carrier forms one of the shoe portions which is displaced directly by operation of the actuating means acting on the carrier, the other shoe portion being displaced by action of the carrier thereon.

A further alternative arrangement may be provided in which the shoe portions of each assembly are mounted on fixed pivots respectively at diametrically opposed locations adjacent the periphery of the brake drum and actuating means acts upon free end regions of said portions at a position intermediate said locations.

The invention will now be described, by way of example, with reference to the accompanying drawings in which:-

Figure 1 is an end view of one form of internal shoe drum brake of the invention;

Figure 2 is an end view of an alternative form of internal shoe drum brake of the invention;

Figure 3 is a view similar to Figures 1 and 2 of a further alternative form of the drum brake of the invention, and

Figure 4 is a view similar to Figures 1 to 3 of yet a further form of the drum brake of the invention.

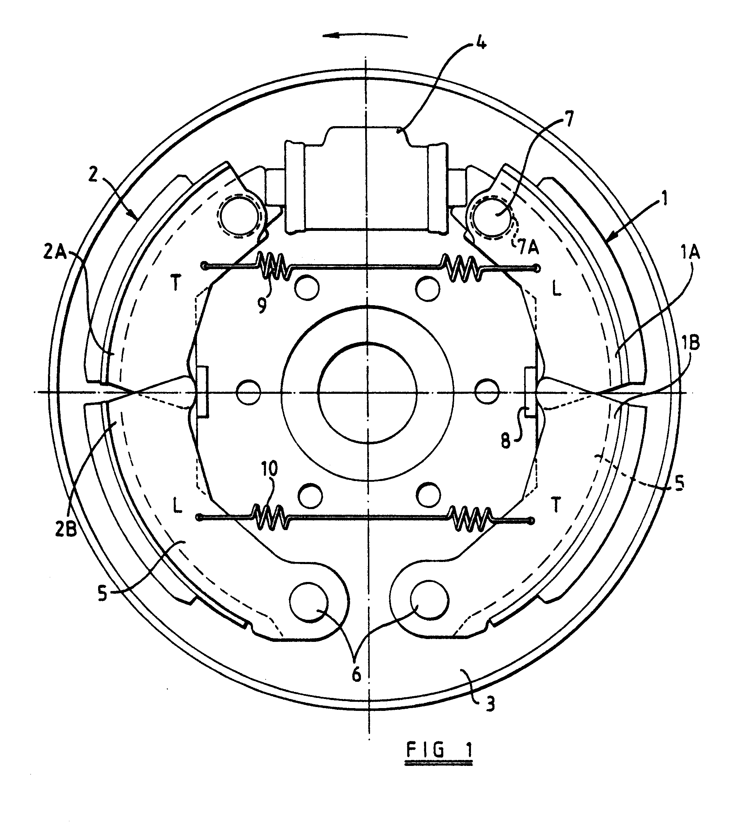

Referring to Figure 1. this illustrates an internal shoe drum brake in which a pair of shoe assemblies 1 and 2 are mounted on a back plate 3, together with an actuator in the form of a double-acting hydraulic cylinder 4 provided between one pair of adjacent ends of the shoe assemblies. The two shoe assemblies are identical and only the assembly 1 will be described in detail. This shoe assembly includes a carrier 5 mounted at one of its ends on the back plate 3 by way of a pivot 6 fixed to the back plate, the carrier engaging the actuator 4 at its other end. The shoe assembly further includes a pair of brake shoe portions 1A, 1B, the latter of which is mounted on the pivot 6 with the carrier, the shoe portion 1A being pivotally mounted on the backplate by way of a further pivot 7 fixed to the back plate. The carrier 5 is provided with an upstanding lug 8 which bears against both of the respective free ends of the shoe portions 1A, 1B, such lug being disposed, in this embodiment, at a location substantially equi-distant from the pivots 6 and 7. Return springs 9, 10 connect the shoe portions 1A and 1B to the respective corresponding shoe portions 2A, 2B at opposed locations and urge the shoe portions inwardly against the lugs 8.

Actuation of the brake is effected by supplying fluid under pressure to the hydraulic cylinder 4, the effect of which is to push the adjacent ends of the carriers 5 outwardly and thereby pivot the carriers about the respective pivots 6. The shoe portions 1A, 1B, 2A, 2B are urged by the lugs 8 to move outwardly with the carriers and, being constrained by the fixed pivots 6, 7, the shoe portions swing outwardly about those pivots into engagement with the drum. The fixed pivot 7 passes through the carrier with a clearance 7A sufficient to permit the required actuating movement of the carrier. Assuming that the drum rotates in the direction indicated by the arrow, it will be seen that the shoe portion 1A acts as a leading shoe and the shoe portion 1B acts as a trailing shoe. The two shoe portions of the other shoe assembly act in the reverse manner. The leading and trailing conditions are indicated on the shoes by references 'L' and 'T'.

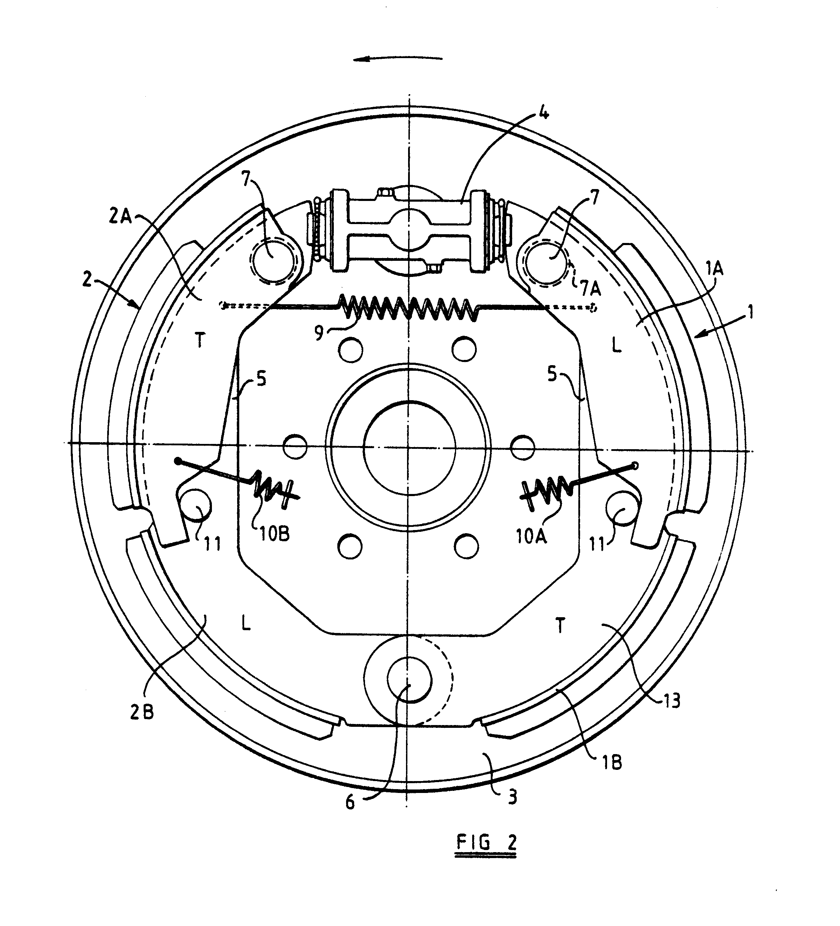

Figure 2 illustrates an alternative embodiment of the brake of the invention in which one of the shoe portions forms an integral part of the carrier. In this arrangement, one pair of adjacent ends of the carriers 5 are mounted on a common pivot 6 fixed to the back plate, the other pair of adjacent ends engaging the actuator 4, as previously, the actuator in this embodiment being a mechanical wedge actuator. The shoe portions 1A, 2A are mounted on the backplate adjacent the actuator by way of fixed pivots 7 which are fixed to the back plate, and which pass with clearance 7A through the carrier, as previously, to permit the required actuating movement of the latter. A return spring 9 interconnects the carriers at a location adjacent the actuator 4 and further return springs 10A, 10B act between the respective shoe portions 1A, 2A and the back plate 3 to urge the shoe portions into engagement with upstanding abutments, illustrated as pins 11 extending generally parallel to the brake drum axis and rigid respectively with the carriers. The shoe portions 1B, 2B are formed by respective portions of the carriers nearest to the pivot 6.

Operation of the actuator 4 causes the carriers to pivot about the pivot 6 against the action of the return spring 9 and thereby move the shoe portions 1B, 2B towards braking engagement with the drum. The shoe portions 1A, 2A are caused to pivot towards the drum about the pivots 7 by outward movement of the pins 11 carried by the shoe portions 1B, 2B and against which the shoe portions 1A and 2A are engaged. For the direction of drum rotation indicated by the arrow, the various shoe portions will assume leading and trailing braking modes as indicated by the designations L and T thereon. Essentially, one shoe portion of each shoe assembly will assume a leading mode and the other a trailing mode.

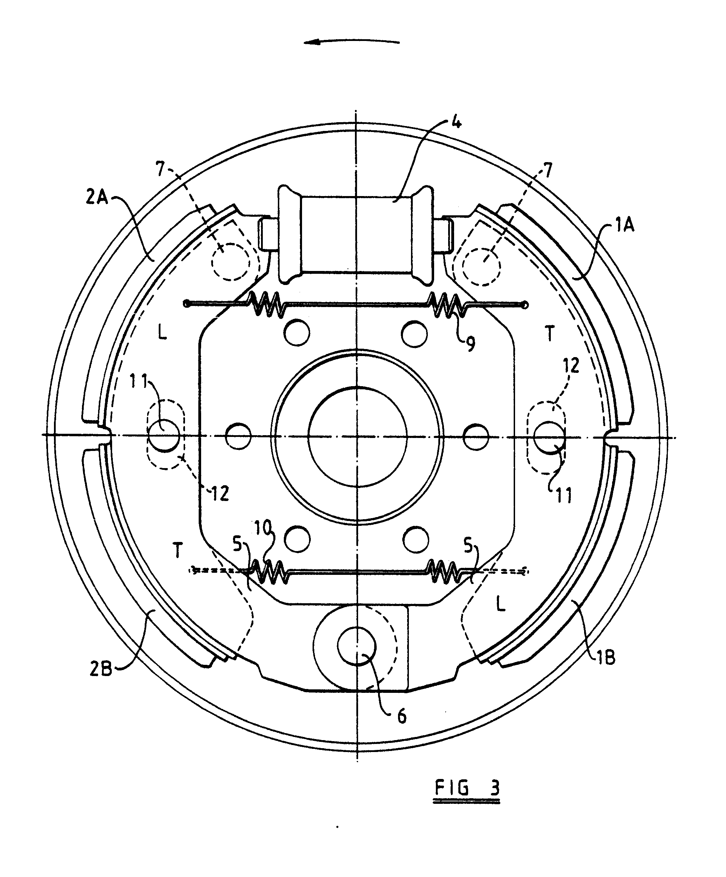

The embodiment illustrated in Figure 3 is similar to that of Figure 2 in that one of the shoe portions of each shoe assembly forms an integral part of the carrier. In this embodiment, the carriers 5 are again pivoted at one pair of adjacent ends on a common pivot 6 fixed to the back plate with their other adjacent ends in engagement with the actuator 4. In this arrangement, however, parts of the carriers adjacent to the actuator 4 form the shoe portions 1A, 2A the shoe portions 1B, 2B being arranged adjacent to the pivot 6, but extending around the drum to be pivoted on the backplate by way of pivots 7 fixed to the back plate adjacent the actuator 4. In this embodiment, the shoe portions 1B, 2B and pivots 7 lie beneath the carriers. The carriers each have a single abutment in the form of a pin 11 projecting towards the underlying shoe portion, such pins extending through slots 12 formed in the respective shoe portions 1B so as normally to engage radially outward edges of the slots under the action of a return spring 10 interconnecting the shoe portions 1B. The carriers in this embodiment are interconnected by a return spring 9. The brake is actuated, as before, by operation of the actuator 4 which expands the carriers by pivoting them about the fixed pivot 6 to bring the shoe portions 1A and 2A into engagement with the drum.

Simultaneously, the shoe portions 1B and 2B are pivoted outwardly towards the drum about the pivots 7 by virtue of the engagement of the pins 11 on the carriers with those shoe portions. Again, the shoe portions perform leading and trailing braking functions as indicated by references 'L' and 'T'.

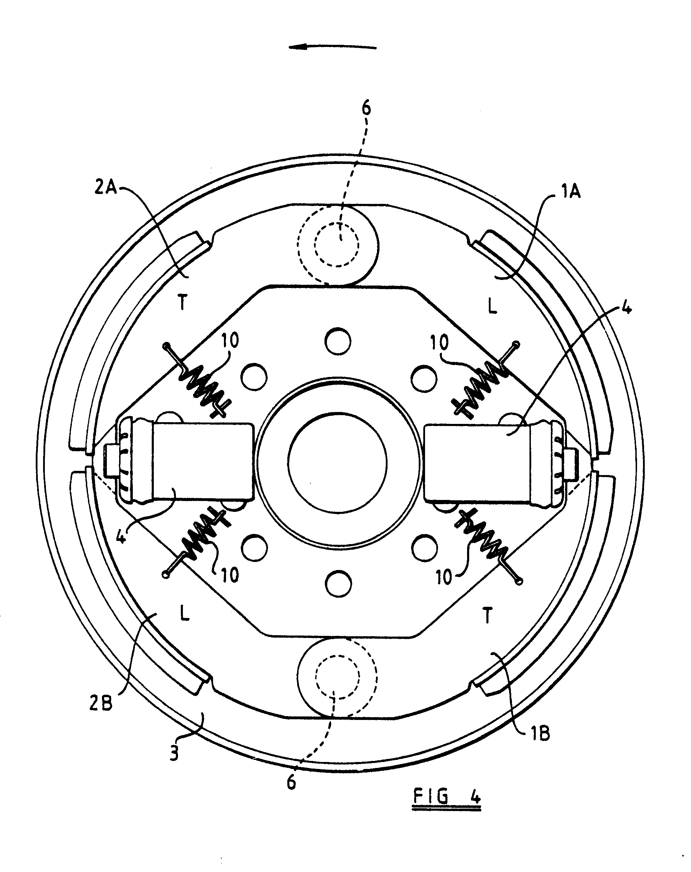

The embodiment illustrated in Figure 4 dispenses with a carrier and employs a pair of single acting hydraulic cylinders 4 to actuate the shoe portions in pairs. The shoe portions are mounted in pairs on a pair of diametrically opposed pivots 6 fixed to the back plate, the arrangement being such that each shoe portion is pivotable independently of the remainder. The adjacent free end portions of the shoe portions overlap and engage the actuators 4 in pairs, one of the actuators being engaged by the shoe portions 1A and 1B and other actuator being engaged by the shoe portions 2A, 2B, each actuator being located equi-distantly around the drum from the two pivots 6. Each shoe portion is urged away from the drum by a respective return spring 10 connected to the back plate 3. Actuation of the brake is effected by operating both of the actuators 4 simultaneously so that the shoe portions are pivoted in pairs 1A, 1B and 2A, 2B about the pivots 6 into engagement with drum. The leading and trailing modes of the two shoes for the direction of drum rotation indicated by the arrow are designated as previously.

The brake of the invention permits a greater degree of shoe to drum conformity than conventional pinned shoe brakes, with resultant improved loading and wear patterns for the shoes. This is due largely to the fact that each shoe portion exerts substantially equal force on the drum, which balances the reaction forces and thereby results in reduced drum distortion and high stability. The brake is of simple construction, which facilitates its assembly, and has the further advantage of being non-handed, which means that it can be used on either side of a vehicle.

The brake of the invention may be adapted for use with any convenient form of actuator, such as a mechanical wedge actuator, an hydraulic actuator or a combined wedge/hydraulic actuator, for example and may be used on either a front or rear vehicle axle.

## Claims

1. An internal shoe drum brake comprising at least one brake shoe assembly within a rotatable brake drum, each said assembly including a pair of brake shoe portions lying sequentially in a circumferential direction adjacent the drum surface, said shoe portions of each brake shoe assembly being mounted on respective pivots fixed relative to the shoe assembly and disposed towards opposite ends of that shoe assembly, and actuating means operable to displace the shoes about said pivots into engagement with the drum surface such that said portions act respectively in a leading and trailing mode for one direction of drum rotation.

2. A brake according to Claim 1 wherein each brake shoe assembly includes a carrier mounted towards one of its ends on a pivot fixed relative to the shoe assembly, each carrier being operatively associated with said actuating means at a location remote from said one end.

3. A brake according to Claim 1 or Claim 2 wherein the shoe portions of each brake shoe assembly are separate from the carrier and engaged by the carrier at an intermediate location on the latter so that operation of said actuating means causes the carrier to pivot both shoe portions outwardly simultaneously about said fixed pivots.

4. A brake according to Claim 2 wherein part of the carrier forms one of the shoe portions which is displaced directly by operation of the actuating means acting on the carrier, the other shoe portion being displaced by action of the carrier thereon.

5. A brake according to Claim 4 wherein said part of the carrier forming one of the shoe portions is adjacent to the carrier pivot, the pivot of the other shoe portion being adjacent the actuator, means on the carrier engaging said other shoe portion at a location remote from its pivot.

6. A brake according to Claim 4 wherein said part of the carrier forming one of the shoe portions is remote from the carrier pivot, the pivot of the other shoe portion being adjacent the actuator and said other portion being disposed between said one portion and the carrier pivot, and means on the carrier engaging said other shoe portion at a location remote from its pivot.

7. A brake according to Claim 5 or Claim 6 wherein said means on the carrier engages said other shoe portion at a location midway between the actuator and carrier pivot.

8. A brake according to Claim 5 or Claim 7 wherein said means on the carrier engaging said other shoe portion is a projection extending generally parallel to the brake drum axis and engaging an edge surface of said other shoe portion.

9. A brake according to Claim 8 wherein said edge is within a slot formed in said other shoe portion.

10. A brake according to Claim 1 wherein the shoe portions of each assembly are mounted on fixed pivots respectively at diametrically opposed locations adjacent the periphery of the brake drum, and said actuating means acts upon free end regions of said portions at a position intermediate said locations.

11. A brake drum according to any one of the preceding claims wherein a pair of brake shoe assemblies is arranged within the drum with the shoe portions arranged symmetrically around the drum.

12. An internal shoe drum brake substantially as hereinbefore described with reference to Figure 1, Figure 2, Figure 3 or Figure 4 of the accompanying drawings.

FIG 1

<u>FIG 2</u>

FIG 3

FIG 4